Europäisches Patentamt

European Patent Office

Office européen des brevets

(11) Publication number: **0 141 871**
**B1**

(12) # EUROPEAN PATENT SPECIFICATION

(45) Date of publication of patent specification: **19.07.89**

(51) Int. Cl.⁴: **B 65 G 47/31**

(21) Application number: **83111367.5**

(22) Date of filing: **14.11.83**

(54) A conveyor for conveying a succession of articles.

(73) Proprietor: **AB TETRA PAK**
**Box 61**
**S-221 00 Lund (SE)**

(72) Inventor: **Inoko, Kenji**
**1818-51, Koshinobara Yasu-Cho**
**Yasu District Shiga Pref. (JP)**

(74) Representative: **Glawe, Delfs, Moll & Partner**
**Patentanwälte**
**Postfach 26 01 62 Liebherrstrasse 20**
**D-8000 München 26 (DE)**

(43) Date of publication of application:
**22.05.85 Bulletin 85/21**

(45) Publication of the grant of the patent:
**19.07.89 Bulletin 89/29**

(84) Designated Contracting States:
**AT BE CH DE FR GB IT LI NL SE**

(56) References cited:
**DE-A-2 514 792**
**DE-A-2 636 322**
**DE-A-2 916 866**
**GB-A-1 119 122**
**US-A-4 147 249**

EP 0 141 871 B1

Courier Press, Leamington Spa, England.

## Description

The invention relates to a conveyor for conveying a succession of articles of substantially same size towards a discharging or treatment zone according to the preamble part of claim 1.

The distance between successive articles travelling on a conveyor of such kind may be variable, depending on the manner of loading the articles onto a conveyor. In many cases, however, it may be desirable that the articles arriving at the discharge or treatment zone having uniform separations between themselves. An example of such a case is where the discharge zone is provided with an abutment wall and a reciprocatable pusher for pushing, with each stroke, a predetermined number of articles, which have been stopped by said abutment wall, transversely from the conveyor onto a receiving surface such as a table, another conveyor etc. If the articles arrive with varying distances or separations, i.e. at random, at such a discharging station, serious problems may arise. If the distance between two successive articles is too short, the pusher may during its forward or return stroke interfere with an arriving article. If the distance between two successive articles is too great, an article which is supposed to be transferred by the pusher might fail to become properly engaged by the pusher and may therefore be moved into a faulty position.

A device according to the preamble part of claim 1 is known from DE—A—2 514 792. In this prior art device the delay/accelerator arrangement serves to pre-adjust the separations between succeeding articles to make sure that no separation below a lower limit value will occur. The final adjustment is made by an additional regulating device comprising a conveyor belt and a chain device. In using such a rather complicated device the expenses relating to installation and maintenance are high. Furthermore the articles or the contents thereof can be damaged or worn as the accelerator device engages the base surface of the articles and can be tilted or overturned during the acceleration.

It is therefore an object of the invention to provide a conveying device which has a more simple construction and in which the danger of damaging the articles or the contents thereof is minimized.

This object is achieved by a conveyor as it is claimed in claim 1. The dependent claims are related to further developments of the invention.

An article becoming engaged by the delaying means will be delayed with respect to the travelling speed of the conveyor. If this delay is sufficiently large for a subsequent article to abut against the article being delayed, the two articles will pass through the delaying means in contact with each other. In other words, any gap which might have existing between the two articles ahead of the delaying means, and which might have been of variable length, has been closed. As the article has passed through the delaying means and is released therefrom, it will again be accelerated by the accelerator means and the conveyor up to the travelling speed of the latter, thereby creating again a gap between this article and the following one which is still being held in the delaying means. The length of this new gap depends only on the ratio of the velocities of the conveyor and the delaying means and is therefore independent on the length of the gap which has existed ahead of the delaying means. Accordingly, the articles will all leave the delaying means with uniform separations between themselves.

It can easily be shown that for closing the gaps between the arriving articles, the relation between the velocities V2 of the delaying means and V1 of the conveyor must fulfill the condition

$$\frac{V_2}{V_1 - V_2} \leqslant \frac{I}{d_{max}}$$

where $d_{max}$ is the maximum separation occurring between two successive articles, and I is the length of each article. The uniform separation d between successive articles leaving the delaying means is of course given by

$$d = I\left(\frac{V_1}{V_2} - 1\right).$$

Accordingly, the separation between the articles can not only be equalized, but can also be set to a desired predetermined value by suitably choosing the ratio of velocities of the delaying means and the conveyor.

In a preferred embodiment of the invention the delaying means comprises two feeding members each having a substantially vertical endless belt. The belts are set at a distance substantially equal to or slightly smaller than the width of the articles travelling on the conveyor. The flexibility of the belts may be sufficient to resiliently grip the articles passing therebetween. Alternatively, the guiding rollers around which the belts travel may be mounted for being resiliently biased against the articles.

As the accelerator means engages the side faces of the articles, they are guided laterally and the danger of damaging the articles by tilting is considerably reduced. It is further minimized by driving the accelerator with the same velocity as the main conveyor, so that the articles are conveyed continuously after they are released from the accelerator, and in using a single main conveyor no junctions between different conveyors or a conveyor and a fixed surface are present.

An embodiment of the invention will now be described with reference to the accompanying drawings wherein

Fig. 1 is a plan view of an entire article conveying and accumulating system wherein the invention is used;

Figs. 2 to 4 are plan views on the conveyor and associated devices in different phases of operation;

Figs. 5 to 8 are plan views of the conveyor and associated devices showing further phases of operation.

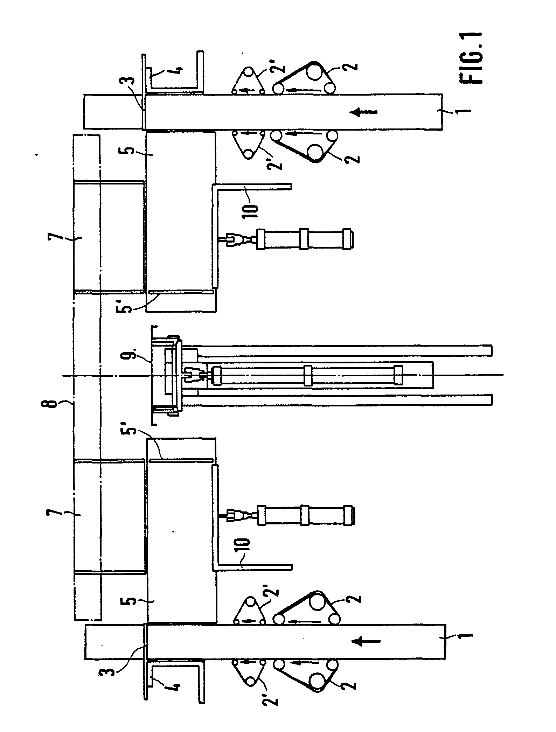

According to Fig. 1, there is provided a symmetrical arrangement of two conveyors 1, each comprising an endless belt, for conveying a succession of substantially identical articles, such as boxes or box-shaped articles, towards a discharge end which is provided with an abutment wall or stopper 3 and a pusher 4 which is reciprocatable transversely to the conveyor 1 for transferring a predetermined number of articles, which have been stopped by the stopper 3, onto a receiving surface, such as a table or further conveyor 5, located adjacent to each conveyor 1. Each said further conveyor 5 is provided with a further abutment wall or stopper 5′ and a further pusher 6 for transferring a predetermined number of articles, which have been accumulated by repeated strokes of the pusher 4, onto a further receiving surface, such as a pallet or tray 7, located adjacent the conveyor 5. Thereafter the palette or tray 7 may travel on a rail 8 to a position in front of a further pusher 9, which transfers the number of articles accumulated on the palette or tray 7 onto a final receiving surface, such as a packaging container, transport pallet or the like.

On both sides of each conveyor 1, which travels at a constant, predetermined speed, vertical belts 2 are provided. Each vertical belt 2 may be a single belt or a plurality of narrow belts arranged vertically above and spaced from each other. The belts travel around guide and support rollers which may be mounted resiliently biased towards the conveyor 1. The vertical belts 2 are driven to travel at a predetermined constant speed which is lower than the travelling speed of the conveyor 1.

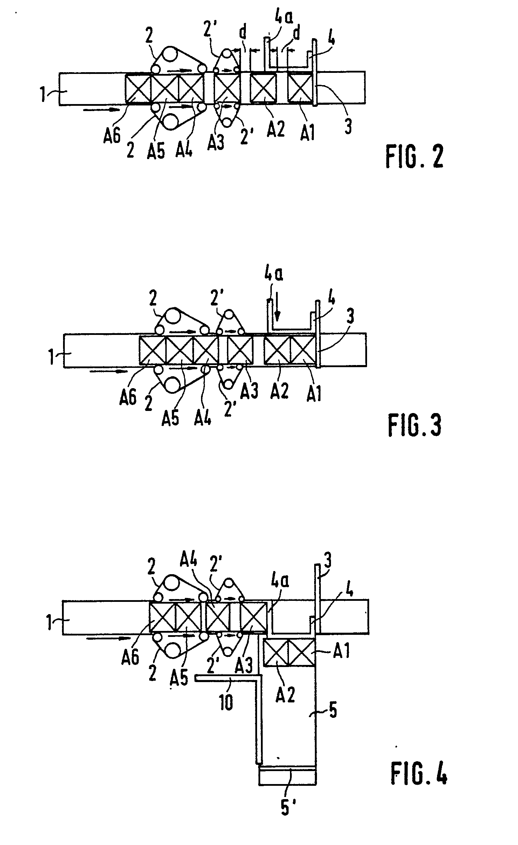

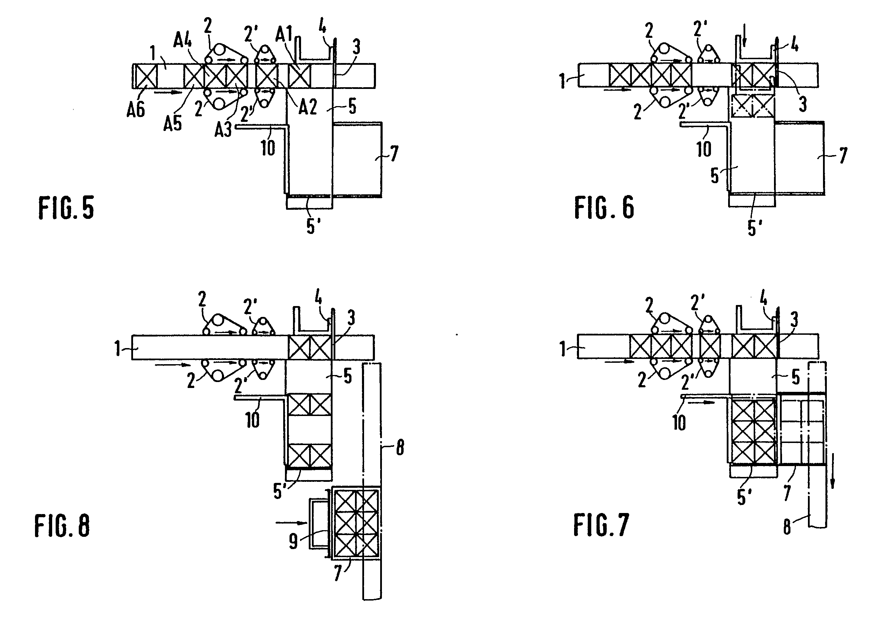

As can be seen from Fig. 2 and 5, the articles conveyed by the conveyor 1 at the travelling speed of the conveyor 1, and having between themselves distances which may vary according to the manner of loading the articles onto the belt 1, will be decelerated when entering into the delaying means formed by the sets of vertical belts 2. Obviously the force by which an article is engaged by the vertical belts 2 must be greater than the frictional force with which the article rests on the conveyor 1. Each article such as A4, A5 in Fig. 2 is therefore delayed by the sets of belts 2 by an amount sufficient for the following article 6 to abut against the preceeding article A5. Accordingly, the articles A4, A5, A6 will pass the belts 2 in contact with each other. When leaving the sets of belts 2, the articles are again accelerated up to the travelling speed of the conveyor 1. This acceleration may be assisted by an additional set of vertical belts 2′, which is arranged between the set of delaying belts 2 and the pusher 4. These additional belts 2′ are driven with the same speed as the conveyor 1, and by engaging between themselves the articles emerging from the delaying belts 2, they will effectively and quickly accelerate the articles up to the driving speed of the conveyor 1, even if the articles had been delayed to a rather low velocity, or almost to a stop, by the delaying belts 2.

According to this arrangement, the articles, when leaving the delaying belts 2, by virtue of their acceleration are separated again from each other and form a uniform constant distance d between successive articles such as A1, A2, A3 in Fig. 2. Accordingly, the articles arrive at a uniform flow rate, i.e. in regular time intervals in the range of the pusher 4.

Accordingly, it is possible to reciprocate the pusher 4 at a constant rate in constant relation to the travelling speed of the conveyor 1, and to adjust the phase of the reciprocating movement such that the forward and return stroke are effected during the intervals provided by the intervals d between successive articles.

As the articles are conveyed by the conveyor 1 to the stopper 3, they are stopped by the stopper 3 and a predetermined number of articles, for example two articles A1, A2 in the embodiment shown, is accumulated in front of the stopper 3. At this moment the pusher 4 provided at the side of the stopper 3 commences to be actuated in the arrow direction of Fig. 3 and pushes out the articles A1, A2 onto the adjacent receiving surface or conveyor 5 (see Fig. 4).

The pusher is provided, on the side facing the upstream direction of the conveyor 1, with an impeding plate 4a, by which the following article arriving on the conveyor 2 may be intercepted during the return stroke of the pusher 4. As soon as the pusher 4 has reached its return position, the following article continues to travel with the conveyor 1 for reaching the location in abutment with the stopper 3. Thereafter, as soon as the article A4 following A3 is in contact with A3, the pusher 4 is again actuated, pushing out both articles A3 and A4 onto the conveyor 5 (see Fig. 6).

Owing to the uniformity of the distance d of the articles the articles will not inadvertently interfere with the pusher 4 during its forward or return stroke, and even during the return stroke of the pusher 4 at maximum one article may engage against the impeding wall 4a, and therefore the lateral force exerted on the pusher by that article due to its friction against the conveyor 1 will only be low.

In order to obtain a constant distance between the articles, it is also possible to intermittently stop the vertical belts 2. This, however, would considerably reduce the conveying speed of the articles and therefore the efficiency of the conveying device would be lowered. Therefore, according to the preferred embodiment of the present invention the vertical belts 2 are driven for constant travelling movement, without intermittent stops.

Repetition of the aforementioned steps results in accumulating a plurality of pairs of articles A1, A2, etc., on the receiving conveyor 5. These pairs of articles become eventually stopped by engagement with the stopper 5′. At this time a prescribed number of articles (for example six articles in Fig.

3

7) have been accumulated on the conveyor 5 in front of the stopper 5', and this group of articles is then transferred in one operation by the further pusher 6 onto the tray or pallet 7 located adjacent the conveyor 5. These trays or pallets are then alternatively moved in front of the pusher 9 and each group of six articles is successively pushed onto a further receiving surface (not shown), whereby a desired number of articles (in groups of six articles) can be accumulated at the receiving surface in front of the pusher 9, which may for example be a packaging container or transporting pallet.

Although vertical belts 2 have been shown as feeding members in the delaying means, other feeding members, such as rolls or sets of rolls, driven at a peripheral speed equal to that of the conveyor 1, may be used. However, the use of vertical belts 2 provides the additional advantage that the successive articles will also be effectively aligned in the longitudinal direction of the conveyor 1.

## Claims

1. Conveyor for conveying a succession of articles (A1...A6) of substantially same size towards a discharging or treatment zone comprising:

a feeding conveyor carrying the articles which have a non-uniform separation,

a delaying means (2) engaging the side faces of the articles and conveying the articles with a velocity which is lower than the velocity of the feeding conveyor,

an accelerator means (2') arranged downstream the delaying means and conveying the articles with a velocity which is higher than the velocity of the delaying means (2), and a discharge conveyor for conveying the articles to the discharge or treatment zone (3, 4, 5)

characterized in that said feeding and discharge conveyors are formed by a single main conveyor (1) extending along the whole device, said accelerator means (2') engages the side faces of the articles and is driven with the same velocity as the main conveyor (1), and in that the length l of the articles, the velocities $V_2$ of the delaying means (2) and $V_1$ of the main conveyor (1) and the maximum separation $d_{max}$ between articles occurring on the feeding conveyor at its upstream end fulfill the following relation

$$\frac{V_2}{V_1 - V_2} \leqslant \frac{l}{d_{max}}$$

2. A conveyor according to claim 1, wherein said accelerator means (2) is resiliently biased towards the conveyor.

3. A conveyor as claimed in one of claims 1 to 2, wherein said delaying means (2) extend along said conveyor (1) over a length greater than the length of one article.

4. A conveyor as claimed in any of claim 1 to 3, wherein said discharging zone comprises an abutment wall (3) extending across said conveyor (1), and a transfer pusher (4) reciprocatable across said conveyor (1) for transferring with each stroke a predetermined number of articles stopped by said abutment wall onto a receiving surface (5) adjacent said conveyor (1).

## Patentansprüche

1. Förderer zum Transportieren einer Reihe von Gegenständen (A1...A6) von im wesentlichen gleicher Größe zu einer Ausgabe- oder Bearbeitungszone hin, mit:

einem Aufgabeband, das die Gegenstände trägt, die einen ungleichmäßigen Abstand haben,

einem Verzögerungsmittel (2), das an den Seitenflächen der Gegenstände angreift und die Gegenstände mit einer Geschwindigkeit transportiert, die geringer ist als die Geschwindigkeit des Ausgabebandes,

einem Beschleunigermittel (2'), das stromabwärts des Verzögerungsmittels angeordnet ist und die Gegenstände mit einer Geschwindigkeit transportiert, die höher ist als die Geschwindigkeit des Verzögerungsmittels (2), und einem Ausgabeband zum Transportieren der Gegenstände zu der Ausgabe oder Bearbeitungszone (3, 4, 5),

dadurch gekennzeichnet, daß das Aufgabe- und Ausgabeband aus einem einzigen Hauptförderer (1) gebildet ist, der sich entlang der ganzen Vorrichtung erstreckt, wobei das Beschleunigermittel (2') an den Seitenflächen der Gegenstände angreift und mit der gleichen Geschwindigkeit wie der Hauptförderer (1) angetrieben wird, und dadurch, daß die Länge l der Gegenstände, die Geschwindigkeiten $V_2$ des Verzögerungsmittels (2) und $V_1$ des Hauptförderers (1) und der maximale Abstand $d_{max}$ zwischen den Gegenständen, der auf dem Aufgabeband an seinem stromaufwärts gelegenen Ende auftritt, die folgende Beziehung erfüllen

$$\frac{V_2}{V_1 - V_2} \leqslant \frac{l}{d_{max.}}$$

2. Förderer nach Anspruch 1, in dem das Beschleunigermittel (2) gegen den Förderer elastisch vorgespannt ist.

3. Förderer nach einem der Ansprüche 1 bis 2, in dem das Verzögerungsmittel (2) sich über eine Länge entlang dem Förderer (1) erstreckt, die größer ist als die Länge eines Gegenstandes.

4. Förderer nach einem der Ansprüche 1 bis 3, in dem die Augabezone eine Anstoßwand (3), die sich quer zu dem Förderer (1) erstreckt, und einen Überführungsschieber (4), der quer zum Förderer (1) hin und her bewegbar ist, umfaßt, um mit jedem Schub eine vorbestimmte Anzahl von Gegenständen, die durch die Anstoßwand gestoppt sind, auf eine Aufnahmefläche (5) neben dem Förderer (1) zu überführen.

**Revendications**

1. Transporteur destiné à transporter une succession d'articles (A1...A6) sensiblement de même dimension vers une zone de déchargement ou de traitement, comprenant:

un transporteur d'alimentation portant les articles qui ont un intervalle non uniforme,

des moyens de retardement (2) portant contre les faces latérales des articles et transportant les articles à une vitesse qui est inférieure à la vitesse du transporteur d'alimentation,

des moyens accélérateurs (2') disposés en aval des moyens de retardement et transportant les articles à une vitesse qui est supérieure à la vitesse des moyens de retardement (2), et un transporteur de décharge destiné à transporter les articles vers la zone de décharge ou de traitement (3, 4, 5)

caractérisé en ce que lesdits transporteurs d'alimentation et de décharge sont formés par un transporteur principal unique (1) s'étendant le long de la totalité du dispositif, lesdits moyens accélérateurs (2') portent contre les faces latérales des articles et sont entraînés à la même vitesse que le transporteur principal (1), et en ce que la longueur I des articles, les vitesses $V_2$ des moyens de retardement (2) et $V_1$ du transporteur principal (1) et l'intervalle maximal $d_{max}$ entre les articles, apparaissant sur le transporteur d'alimentation à son extrémité d'amont, satisfont la relation suivante

$$\frac{V_2}{V_1-V_2} \leqslant \frac{I}{d_{max.}}$$

2. Transporteur selon la revendication 1, dans lequel lesdits moyens accélérateurs (2) sont rappelés élastiquement vers le transporteur.

3. Transporteur selon l'une des revendications 1 et 2, dans lequel lesdits moyens de retardement (2) s'étendent le long dudit transporteur (1) sur une longueur supérieure à la longueur d'un article.

4. Transporteur selon l'une quelconque des revendications 1 à 3, dans lequel ladite zone de déchargement comprend une paroi (3) de butée s'étendant en travers dudit transporteur (1), et un poussoir (4) de transfert pouvant exécuter un mouvement alternatif en travers dudit transporteur (1) pour transférer, à chaque course, un nombre prédéterminé d'articles arrêtés par ladite paroi de butée sur une surface (5) de réception adjacente audit transporteur (1).

FIG.1

EP 0 141 871 B1

EP 0 141 871 B1

FIG. 2

FIG. 3

FIG. 4

FIG.5

FIG. 6

FIG. 8

FIG.7

EP 0 141 871 B1